# EUROPÄISCHE PATENTSCHRIFT

(11) **EP 1 059 210 B1**
(45) Veröffentlichungstag und Bekanntmachung des Hinweises auf die Patenterteilung: **20.10.2004**
(21) Anmeldenummer: 00112432.0
(22) Anmeldetag: 09.06.2000
(51) Int. Cl.: B60R 21/20

(54) **Airbagvorrichtung und Auslöseverfahren dafür**
Airbag device and releasing method thereof
Dispositif à coussin de sécurité gonflable et procédé de déclenchement

(30) Priorität: 09.06.1999 DE 29910059 U
(43) Veröffentlichungstag der Anmeldung: 13.12.2000
(73) Patentinhaber: Volkswagen Aktiengesellschaft, 38436 Wolfsburg (DE)
(72) Erfinder: Müller, Olaf, 65428 Rüsselsheim (DE)
(74) Vertreter: Lindner, Manfred Klaus, Dipl.-Phys.

(56) Entgegenhaltungen:
- EP-A- 1 004 481
- DE-A- 19 726 878
- DE-A- 19 757 435
- DE-U- 29 912 825
- PATENT ABSTRACTS OF JAPAN vol. 1996, no. 03, 29. März 1996 (1996-03-29) & JP 07 291082 A (TOYODA GOSEI CO LTD), 7. November 1995 (1995-11-07)

## Beschreibung

Die Erfindung betrifft eine Airbagvorrichtung nach dem Oberbegriff des Anspruchs 1 sowie ein Auslöseverfahren dafür.

Bei früheren Airbagvorrichtungen werden Airbagklappen bei einem Unfall von einem sich aufblasenden Airbag in einen Fahrzeuginnenraum hinein aufgestoßen. Die Energie des Airbags ist hierzu so groß, dass Menschen im Nahbereich des Airbagaustritts z.B. infolge einer Vorverlagerung des Kopfes einen Genickbruch erleiden können. Die auf die vorliegende Anmelderin/Inhaberin zurückgehenden DE 197 26 878 A, DE 197 33 896 A und europäische Patentanmeldung EP 0 867 346, die ältere internationale EP 1 084 052 sowie die älteren deutschen Gebrauchsmusteranmeldungen 298 19 165.2, 299 05 000.9 und 299 05 919.7 offenbaren Möglichkeiten, den Airbagdeckel vor dem Aufblasen oder Austritt des Airbags in die Airbagvorrichtung, beispielsweise in ein Modul bzw. die Armaturentafel, hinein, d.h. vom Insassen weg, zu ziehen. Dadurch, dass dabei Airbagklappen der Airbagvorrichtung aktiv geöffnet und von einem Insassen weg gezogen werden, damit sich ein Airbag ungehindert zum Insassen hin vorschieben kann, wird eine Verletzung des letzteren an sich öffnenden Airbagklappen oder durch einen sich zu heftig aufblasenden Airbag vermieden oder die Gefahr dafür zumindest drastisch reduziert.

In der älteren nicht vorveröffentlichen EP 1 004 481 A2 ist eine Insassenschutzvorrichtung für ein Kraftfahrzeug gemäß dem Stand der Technik offenbart, wobei ein Airbagmodul vorgesehen ist, das mindestens einen zussammengefalteten Airbag und einen Gasgenerator enthält. Das Airbagmodul ist hinter einer Wand-Austrittsöffnung für den sich entfaltenden Airbag in einer Austrittwand angeordnet. Eine Wand-Abdeckung verschließt die Wand-Austrittsöffnung und ist für einen Airbagaustritt zur Freigabe der Wand-Austrittsöffnung in eine Freigabeposition bewegbar. Ferner ist die Wand-Abdeckung mit einem Stellelement verbunden, das mittels eines pyrotechnischen, mit dem Gasgenerator betätigbaren Antriebs dergestallt verstellbar ist, dass die Wand-Abdeckung vor oder ggf. gleichzeitig mit der Aktivierung des Airbags in eine Freigabeposition in einem Bereich hinter der Austrittwand zur Freigabe der Wand-Austrittöffnung bewegbar ist. Dabei ist ferner vorgesehen, dass die Wandabdeckung als in der Wandkontur verschiebbares, festes Rollo mit einer durchgehenden, vorzugsweise an einer Vorkerbung aufreißbaren Außenhaut ausgebildet ist, dass das Stellelement ein Zugelement als Seilzug ist, der mit dem Rollo in Zugrichtung verbunden ist, und dass der pyroteschnische Antrieb eine Zylinder-Kolben-Einheit ist, wobei der Seilzug mit dem Kolben unmittelbar oder mittelbar verbunden und in Rolo-Zugrichtung bis zur Freigabeposition bewegbar ist.

Bei diesem Stand der Technik sind somit Abdeckeinrichtungen aus einem Rollo und einer Außenhaut gebildet. Letztere wird, wenn das Rollo aufgezogen wird, durch das Rollo in eine Randabdeckposition an der Wand-Austrittöffnung als Kantenschutz bewegt.

Die vorliegende Erfindung hat zum Ziel, eine solche Airbagvorrichtung mit einer möglichst einfachen Öffnungsmechanik zu versehen und zu betreiben, um insbesondere mit möglichst geringem Aufwand Airbag-Austrittsöffnungen und Öffnugnsgestaltungen dafür zu schaffen. Dieses Ziel wird mit einer Airbagvorrichtung nach dem Anspruch 1 sowie einem Auslöseverfahren für eine Airbagvorrichtung nach dem Anspruch 5 erreicht.

Die vorliegende Erfindung betrifft Verbesserungen und vorteilhafte Weiterentwicklungen sämtlicher in den eingangs angegebenen früheren Anmeldungen behandelten Techniken und Ausführungsbeispiele insbesondere hinsichtlich der Bauart und Auslösesteuerung der Airbagvorrichtung speziell bezüglich aktiv zu öffnender Abdeckungen einer Airbag-Austrittsöffnung. Insofern sind die vollständigen Offenbarungsgehalte dieser älteren Anmeldungen insbesondere hinsichtlich der Auslösesteuerung der Airbagvorrichtung und speziell deren aktiv zu öffnenden Abdeckungen hiermit durch die Bezugnahmen vollumfänglich in die vorliegenden Unterlagen aufgenommen.

Erfindungsgemäß ist bei einer Airbagvorrichtung mit einem Unterbringungsraum für einen Airbag, Abdeckeinrichtungen für einen Öffnungsbereich des Unterbringungsraums zum Austritt des Airbags nach einer Auslösung der Airbagvorrichtung, und einer Öffnungsmechanik zum Einziehen der Abdeckeinrichtungen aus dem Öffnungsbereich in den Unterbringungsraum, vorgesehen, dass die Abdeckeinrichtungen wenigstens eine verformbare Abdecklage enthalten, die an einem Halterandbereich des Öffnungsbereiches fixiert und im übrigen zum Freigeben des Öffnungsbereiches von der Öffnungsmechanik in den Unterbringungsraum hinein verbiegbar ist.

Durch diese Ausgestaltung wird die Abdecklage sozusagen ins Innere des Unterbringungsraums gerissen, wenn die Airbagvorrichtung ausgelöst wird. Dadurch wird nicht nur der Weg für den sich aufblasenden Airbag sicher und zuverlässig freigegeben, sondern werden in vorteilhafter Weise auch Teilchen, die beim Einziehen der Abdecklage in den Unterbringungsraum ausser im Halterandbereich freigesetzt werden können, weitestgehend eingefangen und ins Innere des Unterbringungsraums mitgenommen, so dass solche Teilchen Insassen nicht gefährlich werden können.

Bei einer bevorzugten Weiterbildung der Erfindung ist vorgesehen, dass die wenigstens eine verformbare Abdecklage Bestandteil einer Innenraumabdeckung eines Fahrzeuges ist und ausser im Halterandbereich durch Sollrißlinien gegenüber der übrigen Innenraumabdeckung des Fahrzeuges bestimmt ist.

Eine andere vorzugsweise Fortbildung der Erfindung besteht darin, dass die wenigstens eine verformbare Abdecklage Versteifungen enthält, die ein Verformen oder Verbiegen der Abdecklage nur um eine Achse begünstigen oder zulassen, oder mit Versteifungen versehen ist, die vor einem Verformen oder Verbiegen der Abdecklage von letzterer abgelöst werden.

Mit Vorzug ist bei einer Airbagvorrichtung nach der Erfindung ferner vorgesehen, dass die Öffnungsmechanik nach einer Auslösung der Airbagvorrichtung durch eine eigene Antriebsquelle, durch einen Gasgenerator der Airbagvorrichtung oder durch den sich aufblasenden Airbag betrieben wird.

Insbesondere kann die Öffnungsmechanik eine solche Zwangsführung enthalten, mittels der die wenigstens eine Abdecklage sich verformend aus dem Öffnungsbereich hin zu einem und/oder in einen Randbereich des Unterbringungsraums ziehbar ist.

Verfahrensmäßig wird das Ziel der Erfindung mit einem Auslöseverfahren für eine Airbagvorrichtung mit einem Unterbringungsraum für einen Airbag erreicht, wobei zum Austritt des Airbags nach einer Auslösung der Airbagvorrichtung Abdeckeinrichtungen für einen Öffnungsbereich des Unterbringungsraums mittels einer Öffnungsmechanik aus dem Öffnungsbereich in den Unterbringungsraum eingezogen werden, indem wenigstens eine verformbare Abdecklage der Abdeckeinrichtungen, die an einem Halterandbereich des Öffnungsbereiches fixiert ist, im übrigen zum Freigeben des Öffnungsbereiches von der Öffnungsmechanik in den Unterbringungsraum hinein verbogen wird. Die mit diesem Verfahren erzielbaren Wirkungen und Vorteile sind dieselben, die mit der Vorrichtung erreicht werden.

Vorzugsweise läßt sich dieses Auslöseverfahren für eine Airbagvorrichtung dadurch weiterbilden, dass die wenigstens eine verformbare Abdecklage beim Einziehen in den Unterbringungsraum längs Sollrißlinien von einer die Abdeckeinrichtungen umgebenden Innenraumabdeckung eines Fahrzeuges abgetrennt wird. Alternativ oder zusätzlich kann vorgesehen sein, dass die wenigstens eine verformbare Abdecklage beim Einziehen in den Unterbringungsraum auf Grund von Versteifungen zumindest im wesentlichen nur um eine Achse verformt oder verbogen wird, oder dass Versteifungen der wenigstens einen verformbaren Abdecklage beim Einziehen in den Unterbringungsraum vor einem Verformen oder Verbiegen der Abdecklage von letzterer abgelöst werden.

Weiterhin ist bei dem Auslöseverfahren für eine Airbagvorrichtung mit Vorzug vorgesehen, dass die Öffnungsmechanik nach einer Auslösung der Airbagvorrichtung durch eine eigene Antriebsquelle, durch einen Gasgenerator der Airbagvorrichtung oder durch den sich aufblasenden Airbag betrieben wird.

Eine andere bevorzugte Fortbildung des erfindungsgemäßen Verfahrens besteht darin, dass die Öffnungsmechanik mittels einer Zwangsführung die wenigstens eine Abdecklage sich verformend aus dem Öffnungsbereich hin zu einem und/oder in einen Randbereich des Unterbringungsraums zieht.

Weitere bevorzugte und vorteilhafte Ausgestaltungen ergeben sich aus Kombinationen der abhängigen Ansprüche sowie aus dem gesamten Offenbarungsgehalt der vorliegenden Unterlagen.

Anhand der nachfolgend beschriebenen und in den Zeichnungen dargestellten Ausführungs- und Anwendungsbeispiele wird die Erfindung näher erläutert.
- Fig. 1 und 2: zeigen schematisch ein erstes Ausführungsbeispiel einer Airbagvorrichtung mit einer Öffnungsmechanik zum Freigeben eines Öffnungsbereiches teilweise und in einem Querschnitt vor bzw. nach einem Auslösen der Airbagvorrichtung,
- Fig. 3 bis 5: zeigen schematisch ein zweites Ausführungsbeispiel einer Airbagvorrichtung mit einer Öffnungsmechanik zum Freigeben eines Öffnungsbereiches teilweise und in einem Querschnitt vor einem Auslösen der Airbagvorrichtung, in einem Zwischenstadium während des Freigebens des Öffnungsbereiches bzw. in einem Stadium bei maximal freigegebenem Öffnungsbereich,
- Fig. 6 und 7: zeigen schematisch ein drittes Ausführungsbeispiel einer Airbagvorrichtung mit einer Öffnungsmechanik zum Freigeben eines Öffnungsbereiches teilweise und in einem Querschnitt vor bzw. nach einem Auslösen der Airbagvorrichtung, und
- Fig. 8 und 9: zeigen schematisch Beanspruchungen an Rändern der Abdeckeinrichtungen beim zweiten bzw. beim ersten bis dritten Ausführungsbeispiel.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

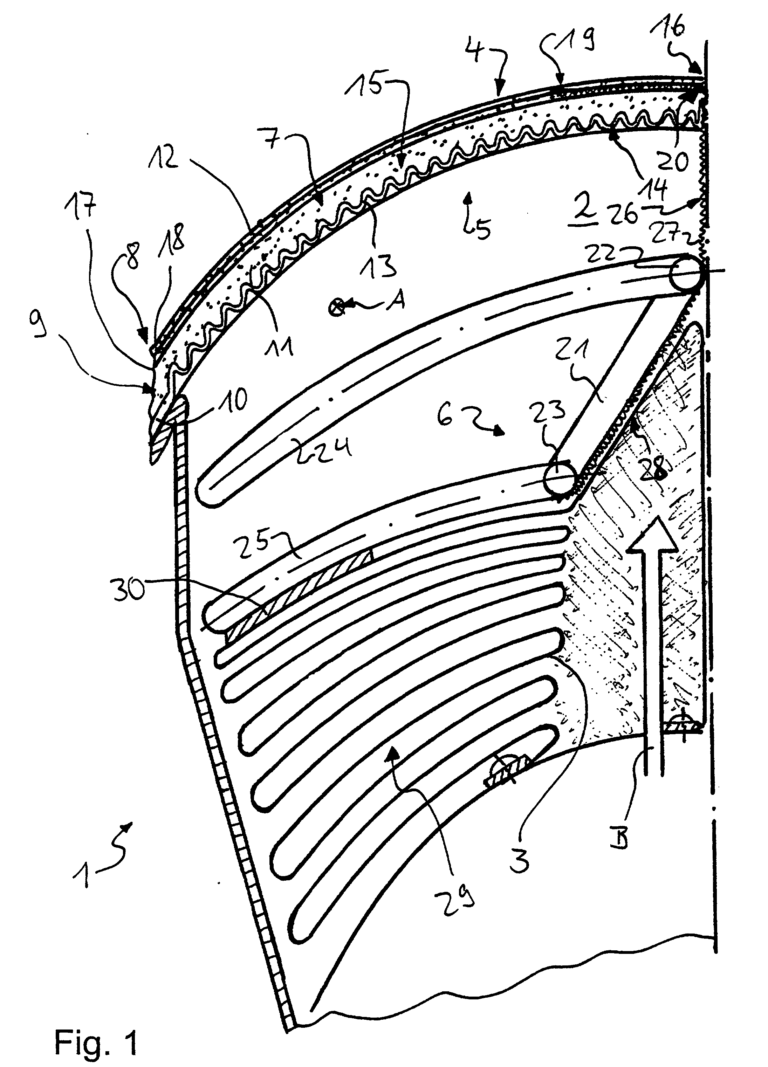

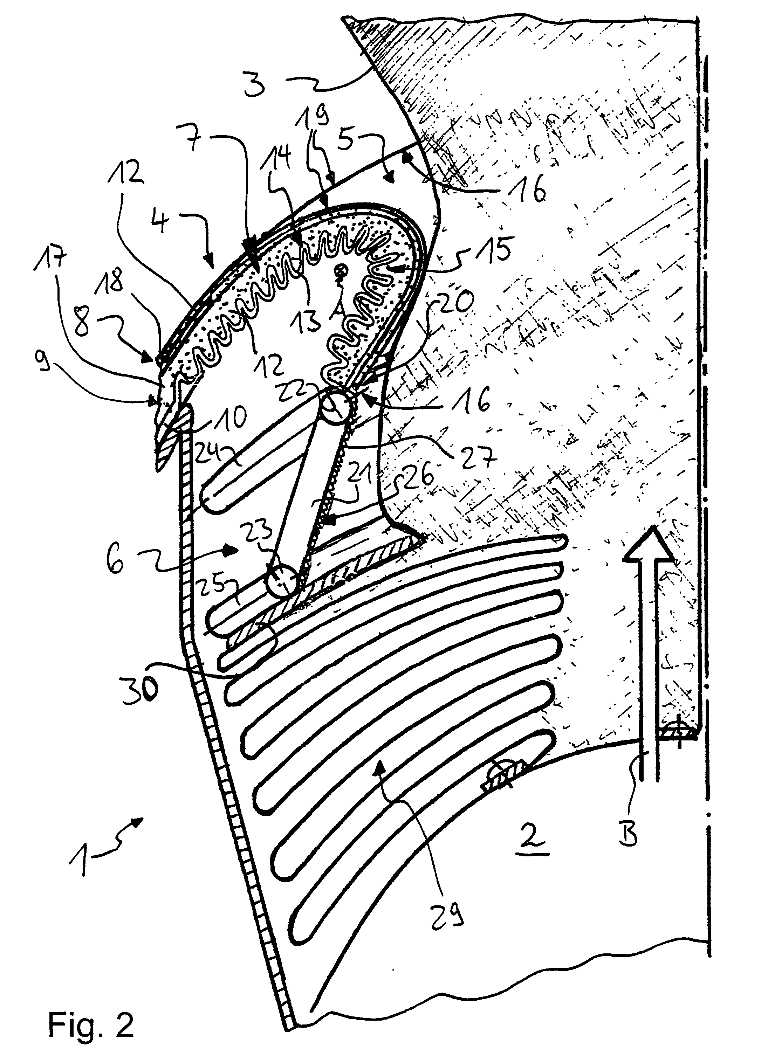

Unter Bezugnahme auf die Fig. 1 und 2 wird die Erfindung nachfolgend anhand eines ersten Ausführungsbeispiels lediglich exemplarisch näher erläutert, woraus sich weitere Merkmale, Funktionen und Vorteile ergeben. In der Fig. 1 ist eine Airbagvorrichtung 1 vor und in der Fig. 2 nach einer Auslösung gezeigt.

Die Airbagvorrichtung 1 enthält einen Unterbringungsraum 2 für einen Airbag 3, Abdeckeinrichtungen 4 für einen Öffnungsbereich 5 des Unterbringungsraums 2 zum Austritt des Airbags 3 nach einer Auslösung der Airbagvorrichtung 1, und eine Öffnungsmechanik 6 zum Einziehen der Abdeckeinrichtungen 4 aus dem Öffnungsbereich 5 in den Unterbringungsraum 2. Die Abdeckeinrichtungen 4 enthalten wenigstens eine verformbare klappenähnliche Abdecklage 7, die an einem Halterandbereich 8 des Öffnungsbereiches 5 dauerhaft fixiert ist.

Bei dem in den Fig. 1 und 2 gezeigten Ausführungsbeispiel handelt es sich um eine Airbagvorrichtung 1, die auf einer Beifahrerseite in einem Fahrzeug (nicht gezeigt) installiert ist. Die vorliegende Erfindung ist aber nicht auf den Einsatz einer erfindungsgemäßen Airbagvorrichtung 1 auf einer Beifahrerseite in einem Fahrzeug beschränkt, sondern kann mit Vorteil auch auf einer Fahrerseite, im Kopfbereich oder Seitenbereich von Insassen mit Vorteil genutzt werden.

Wenn die Airbagvorrichtung 1 auf einer Beifahrerseite eines Fahrzeuges (nicht gezeigt) vorgesehen ist, wird sie zweckmäßigerweise vom Insassen aus gesehen hinter einer Armaturentafel 9 untergebracht, die somit eine Innenraumabdeckung des Fahrzeuges darstellt. Für ein gefälliges Aussehen sind Armaturentafeln verkleidet und enthalten üblicherweise einen Träger 10, eine Schaumstoffschicht 11 und eine Folienschicht 12 in dieser Reihenfolge zu den Insassen hin.

Die Abdeckeinrichtungen 4 sind grundsätzlich in die Armaturentafel 9 integriert, so dass die Abdecklage 7 auch die Schaumstoffschicht 11 und die Folienschicht 12 enthält. Ferner enthält die aus Abdecklage 7 analog zum Träger 10 in der Armaturentafel 9 einen Grundträger 13, der als Versteifung 14 ausgebildet ist, die eine Wellenstruktur 15 hat. Auf Grund der Wellenstruktur 15 ist die Versteifung 14 um eine Achse A (siehe Fig. 2) biegbar, die parallel zu den Wellentälern und -bergen der Wellenstruktur 15 verläuft, aber in anderen Richtungen zumindest im wesentlichen unverformbar.

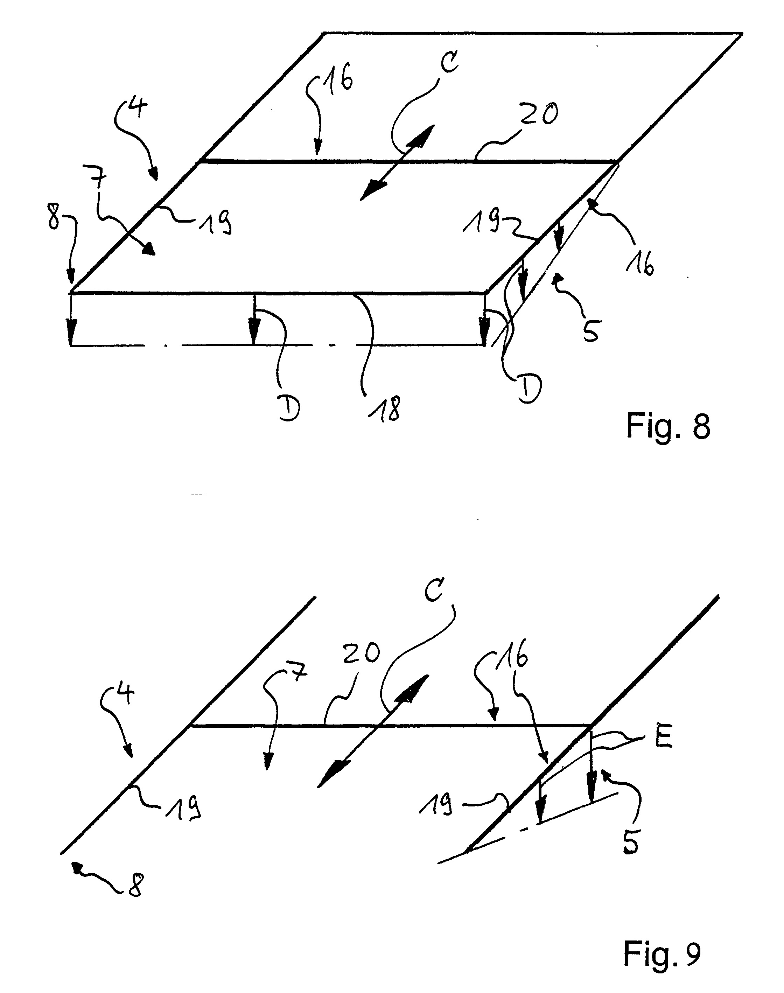

Der Träger 10 der Armaturentafel 9 und der Grundträger 13 der Abdecklage 7 sind getrennte Teile, so dass insbesondere durch die Form und Abmessungen des Grundträgers 13 der Öffnungsbereich 5 und damit die Austrittsöffnung für den Airbag 3 nach Auslösung der Airbagvorrichtung 1 bestimmt ist. Wenn die Abdeckeinrichtungen 4 mehr als eine Abdecklage 7 enthalten, wie beispielsweise zwei Abdecklagen 7, die nebeneinander liegen und sich z.B. nach links und rechts öffnen lassen, ist der Öffnungsbereich 5 insbesondere durch die Form und Abmessungen der Grundträger 13 der beiden Abdecklagen 7 bestimmt. Entsprechend der Form eines jeden eingesetzten Grundträgers 13 sind Sollrißlinien 16 (vergleiche insbesondere Fig. 8 und 9) in der Schaumstoffschicht 11 und der Folienschicht 12 vorgesehen, längs denen die Schaumstoffschicht 11 und die Folienschicht 12 bei einer entsprechenden Zugbelastung reissen. Die Sollrißlinien 16 können durch Weglassen oder Schwächen von Material der Schaumstoffschicht 11 und der Folienschicht 12 in an und für sich bekannter Weise gebildet sein. Bevorzugt sind die Sollrißlinien 16 so, dass sie von der Sichtseite der Folienschicht 12 für Insassen nicht sichtbar sind. Insbesondere wird dabei auch darauf geachtet, dass kein "Einfallen" des Materials der Folienschicht 12 und/oder der Schaumstoffschicht 11 längs der Sollrißlinien 16 auftritt.

Ausgehend von einer rechteckigen Form des Grundträgers 13 bilden die Sollrißlinien 16 zusammen mit der dauerhaften Fixierung 17 der Abdecklage 7 am Halterandbereich 8 des Öffnungsbereiches 5 dieselbe oder zumindest eine ähnliche rechteckige Form. Die dauerhafte Fixierung 17 der Abdecklage 7 am Halterandbereich 8 des Öffnungsbereiches 5 bildet die Halteseite 18 (vergleiche insbesondere Fig. 8 und 9) der Abdecklage 7. Ausgehend von dieser Halteseite 18 enthalten die Sollrißlinien 16 rechtwinklig davon weg verlaufende parallele Längs-Sollrißlinien 19 (vergleiche insbesondere Fig. 8 und 9), die an ihren anderen Enden durch eine Quer-Sollrißlinie 20 (vergleiche insbesondere Fig. 8 und 9) verbunden sind, die parallel zur Halteseite 18 verläuft.

Die Form der Abdecklage 7 ist nicht auf eine rechteckige Form beschränkt und beispielsweise trapezartig, parallelogrammartig, etc. sein. Ferner können statt einer Abdecklage 7 mehrere klappenartige Abdecklagen 7 vorgesehen sein, die zusammen dem Öffnungsbereich 5 abdecken. Die Anzahl und Formen von Abdecklagen 7 kann somit im Rahmen der vorliegenden Erfindung geeignet in Abhängigkeit von örtlichen und funktionalen Gegebenheiten des Fahrzeugs und der Airbagvorrichtung 1 gewählt werden.

Die Öffnungsmechanik 6 enthält eine Druckplatte 21, die über Bolzen 22 und 23 in Führungsschlitzen 24 bzw. 25 geführt ist, und Verbindungseinrichtungen 26, wie beispielsweise Zugdrähte 27, mittels denen die Druckplatte 21 mit einer Abdecklage 7 verbunden ist. Bei dem in den Fig. 1 und 2 gezeigten Ausführungsbeispiel verbinden Zugdrähte 27 die Druckplatte 21 mit der Abdecklage 7 im Bereich deren Quer-Sollrißlinie 20.

Angetrieben wird die Öffnungsmechanik 6 vom sich bei einer Auslösung der Airbagvorrichtung 1 aufblasenden Airbag 3, der so gefaltet in dem Unterbringungsraum 2 liegt, dass er beim Aufgeblasenwerden gegen die Druckplatte 21 drückt und diese mittels der Bolzen 22 und 23 längs der Führungsschlitze 24 und 25 verschiebt. Diese Bewegung der Druckplatte 21 wird durch die Zugdrähte 27 auf die Abdecklage 7 übertragen, so dass beginnend im Bereich der Quer-Sollrißlinie 20 eine Zugkraft auf die Abdecklage 7 ausgeübt wird. Die Folienschicht 12 und ggf. auch die Schaumstoffschicht 11 reissen dadurch längs der Quer-Sollrißlinie 20 ab. Durch die weitere Bewegung der Druckplatte 21 wird die Abdecklage 7 zunehmend in den Unterbringungsraum 2 hineingezogen, während die Folienschicht 12 und ggf. auch die Schaumstoffschicht 11 längs der Längs-Sollrißlinien 19 reissen. Das Reissen der Abdecklage 7 längs ihrer Sollrißlinien 16 wird an der Halteseite 18 gestoppt, entweder nur durch deren Stabilität oder auch durch Bewegungsbegrenzungen (nicht bezeichnet) der Druckplatte 21, wie beispielsweise Endanschläge (nicht bezeichnet) der Führungsschlitze 24. Die von der Abdecklage 7 erreichte Stellung in der Fig. 2 ist eine Zwischenstellung und noch nicht die Endstellung.

Die Faltung des Airbags 3 stellt sicher, dass sich zunächst ein Druckteil 28 des Airbags 3 so ausdehnt, dass zumindest vorrangig die Druckplatte 21 beaufschlagt wird, und erst nachdem letztere zumindest eine Zwischenstellung (z.B. wie in der Fig. 2 gezeigt) oder vorzugsweise die Endstellung erreicht hat, die übrige Faltung 29 auseinandergezogen werden kann, um sich vollständig in einen Fahrzeuginnenraum (nicht gezeigt) hinein auszudehnen. Um dies sicherzustellen, ist im Rahmen der vorliegenden Erfindung eine Zwischenwand 30 vorgesehen, hinter der die übrige Faltung 29 des Airbags 3 untergebracht ist und Falte für Falte hervorgezogen wird, wenn das Druckteil 28 des Airbags 3 durch den Öffnungsbereich 5 aus dem Unterbringungsraum 2 austritt. Die Zwischenwand 30 stellt ausserdem sicher, dass sich der Airbag 3 nicht auf der falschen Seite (in den Fig. 1 und 2 die linke Seite) der Druckplatte 21 entfalten und letztere so in der falschen Richtung beaufschlagen kann. Der wesentliche Gasstrom zum Aufblasen des Airbags 3 ist allgemein durch den Pfeil B symbolisch dargestellt, ohne dass damit die genaue und einzige Gasstromrichtung angegeben sein soll.

Die Abdeckeinrichtungen 4 werden sozusagen aus der Armaturentafel 9 längs der Längs-Sollrißlinien 19 herausgerissen, nachdem die Quer-Sollrißlinie 20 gerissen ist, und in den Unterbringungsraum 2 der Airbagvorrichtung 1 hineingebogen, wenn der Airbag 3 aufgeblasen wird. Diese Alternative zu den in den eingangs angegebenen älteren Anmeldungen offenbarten Ausführungen mit starren Airbagklappen basiert auf dem Zurückziehen der Abdecklage 7 mit einem ausreißbarem "gewellten" und biegsamen Grundträger 13 und einer Krafteinleitung in die Abdeckeinrichtungen 4 am Öffnungsende der Abdecklage 7 (ggf. zweier Abdecklagen 7) beispielsweise mittels eines z.B. in die Schaumstoffschicht 11 eingebetteten Gewebes (nicht dargestellt) oder einer an die Folienschicht 12 angeformten oder angeklebten Gießhaut (nicht dargestellt). Ein solches Gewebe oder eine solche Gießhaut stellt eine feste Verbindung des Grundträgers 13 mit der Folienschicht 12 sicher, so dass, wenn an dem Grundträger 13 gezogen wird, die Folienschicht 12 und damit auch die Schaumstoffschicht 11 zuverlässig mitgenommen werden und sich somit nicht am Öffnungsende der Abdecklage 7 vom Grundträger 13 ablösen können.

Bei dem vorstehend erläuterten und in den Fig. 1 und 2 gezeigten ersten Ausführungsbeispiel der Airbagvorrichtung 1 nach der vorliegenden Erfindung ist als Antrieb für die Öffnungsmechanik 6 der sich in spezieller Weise aufblasende und entfaltende Airbag 3 vorgesehen. Zwar handelt es sich bei dieser Antriebsversion um eine eigenständige und daher auch selbst schutzfähige und schutzwürdige Ausgestaltung, jedoch ist die vorliegende Erfindung, soweit sie sich mit dem Erstellen einer Austrittsöffnung für einen Airbag durch Hineinbiegen einer Abdeckschicht in einen Unterbringungsraum der Airbagvorrichtung befaßt, nicht auf diese Ausführung des Antriebs der Öffnungsmechanik 6 beschränkt. Auch eine direkte Anbindung des Öffnungsmechanismus 6 oder der Abdecklage 7 an den Airbag 3 und andere Geometrien, die nicht gezeigt sind, können zur Realisierung dieses Grundgedankens herangezogen werden. Ferner lassen sich sämtliche anderen Antriebsarten, wie sie insbesondere in den eingangs angegebenen älteren Anmeldungen offenbart sind, ohne weiteres mit den Merkmalen der vorliegenden Erfindung zum Erstellen einer Austrittsöffnung für einen Airbag durch Hineinbiegen einer Abdeckschicht in einen Unterbringungsraum der Airbagvorrichtung kombinieren. Zur Vermeidung von bloßen Übernahmen von Text und Zeichnungen werden die Offenbarungsgehalte dieser älteren Anmeldungen hinsichtlich der Antriebs- und Steuerarten zum Erstellen einer Austrittsöffnung für einen Airbag hiermit durch Bezugnahme vollumfänglich in die vorliegenden Unterlagen aufgenommen.

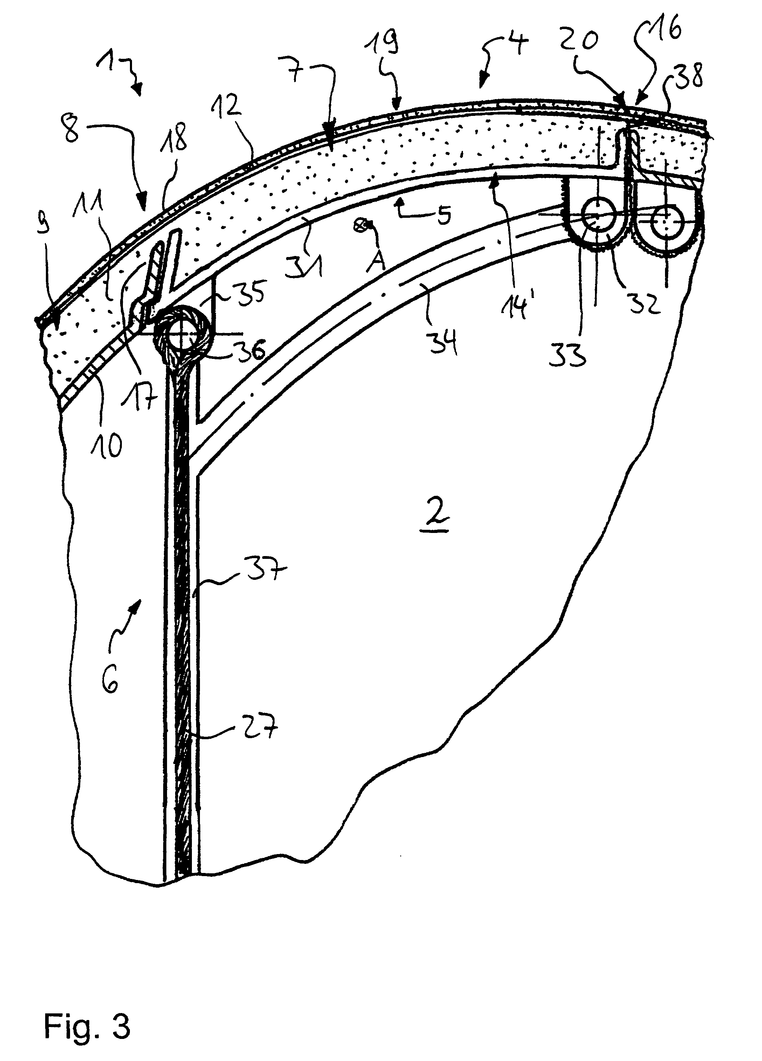

Ein zweites Ausführungsbeispiel einer Airbagvorrichtung 1 nach der vorliegenden Erfindung wird nachfolgend unter Bezugnahme auf die Fig. 3, 4 und 5 näher erläutert, woraus sich auch weitere Merkmale, Funktionen und Vorteile der vorliegenden Erfindung ergeben. Dieses zweite Ausführungsbeispiel basiert grundsätzlich darauf, dass die Abdeckeinrichtungen 4 stabile einziehbare Airbagklappen 31 als Versteifungen 14' enthalten, wie sie in den eingangs angegebenen älteren Anmeldungen offenbart sind, auf deren gesamten Offenbarungsgehalt hiermit zur Vermeidung von bloßen Übernahmen von Text und Zeichnungen insbesondere hinsichtlich Antrieb, Ausgestaltung und Steuerung solcher Airbagklappen vollumfänglich Bezug genommen wird. Das zweite Ausführungsbeispiel kann daher als Ergänzung zu Maßnahmen an der Armaturentafel bei einziehbaren insbesondere Beifahrerairbagklappen nach den aufgeführten älteren Anmeldungen angesehen werden.

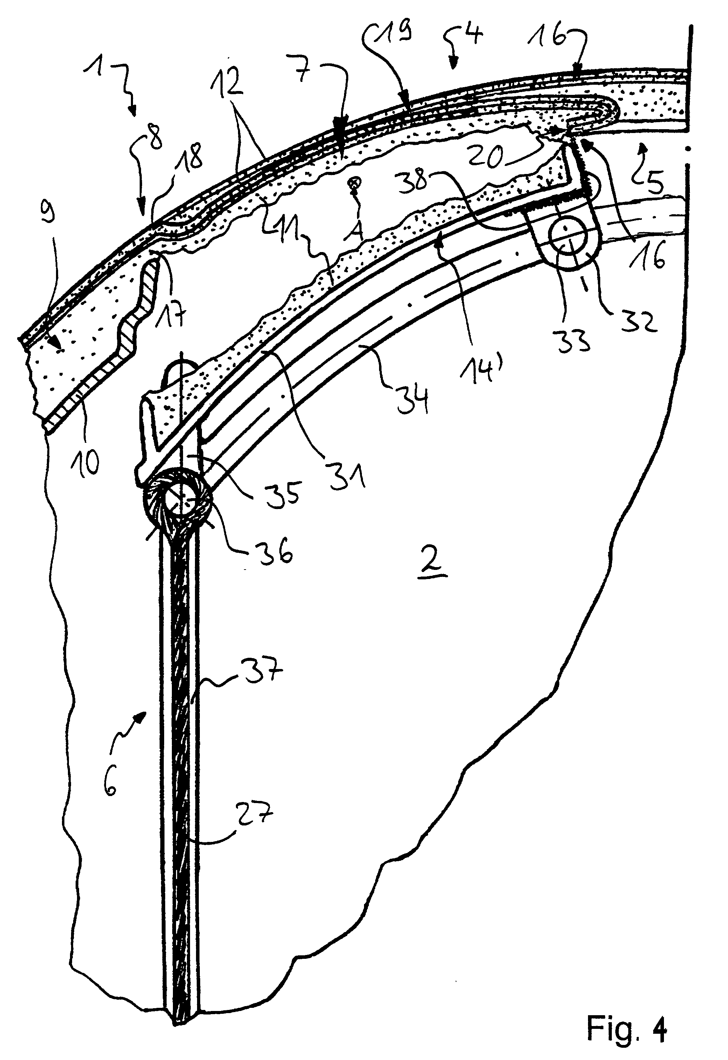

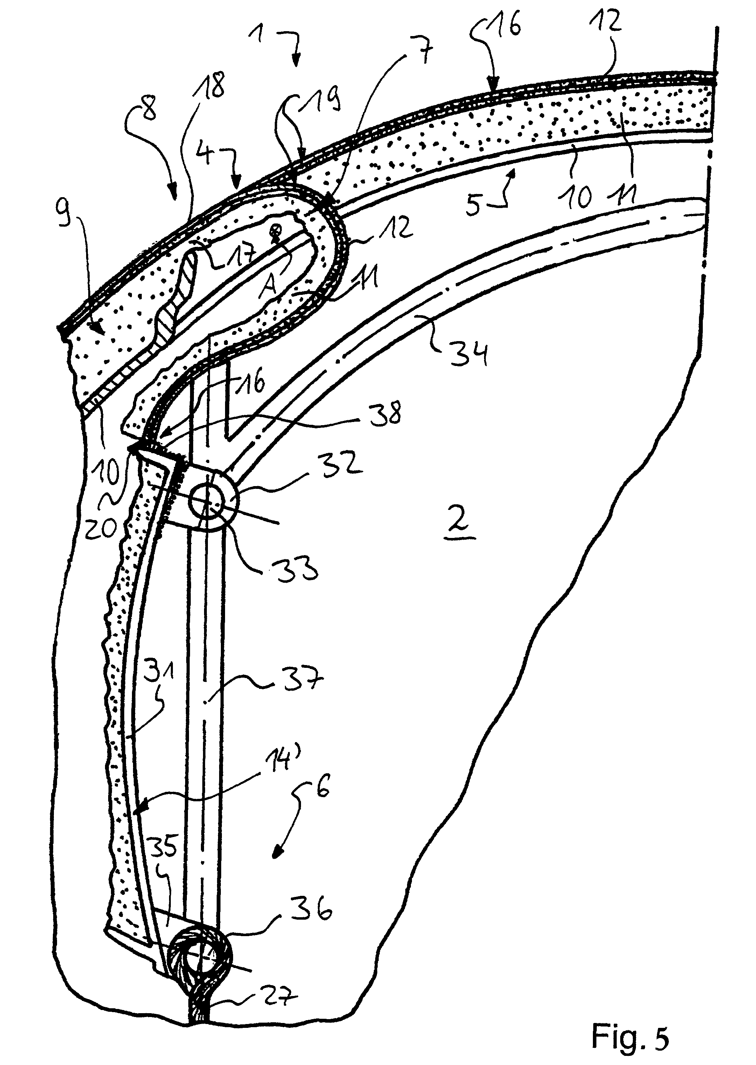

Die Fig. 3 zeigt den Zustand der Airbagvorrichtung 1 vor einem Unfall, die Fig. 4 zeigt die Situation nach dem Beginn der Öffnung des "Airbagdeckels" und die Fig. 5 zeigt den ganz geöffneten Airbagdeckel jeweils schematisch in einem Schnitt durch eine Armaturentafel 9 am seitlichen Rand von Abdeckeinrichtungen 4.

Die Armaturentafel 9 besteht von einem Insassen aus gesehen der Reihe nach aus der Folienschicht 12, der Schaumstoffschicht 11 und dem Träger 10, wobei die Schaumstoffschicht 11 und der Träger 10 von der Folienschicht 12 verdeckt und daher für einen Insassen nicht wirklich zu sehen sind. In dem Träger 10 der Armaturentafel 9 ist der Grundträger 13 der Abdeckeinrichtungen 4 als gesondertes Teil enthalten und bestimmt den Öffnungsbereich 5, durch den ein Airbag (nicht gezeigt) nach Auslösung der Airbagvorrichtung zu einem Insassen (nicht gezeigt) hin durch die Armaturentafel 9 austreten kann. Der Grundträger 13, der die Versteifung 14' der Abdeckeinrichtungen 4 bildet, besteht bei diesem zweiten Ausführungsbeispiel aus einem starren Airbagdeckel 31 und trägt vor einer Auslösung der Airbagvorrichtung 1 die Abdecklage 7, die aus der Folienschicht 12 und der Schaumstoffschicht 11 besteht. Die Folienschicht 12 und die Schaumstoffschicht 11 überziehen die Armaturentafel 9 und den Airbagdeckel 31 und machen daraus für den äußeren Anblick eine Einheit. Die Folienschicht 12 ist entsprechend dem ersten Ausführungsbeispiel, das unter Bezugnahme auf die Fig. 1 und 2 erläutert wurde, längs Sollrißlinien 16 vorgeschädigt, was je nach Bauart auch für die Schaumstoffschicht 11 gelten kann.

An einem Ende des Grundträgers 13 des Airbagdeckels 31 (in der Fig. 3 das rechte Ende) sind beidseitig (d.h. oben und unten) Lagerböcke 32 mit Bolzen 33 (jeweils nur einer ist in der Ansicht der Fig. 3 bis 5 zu sehen) vorgesehen, die zur Zwangsführung des Airbagdeckels 31 in je einem Führungsschlitz 34 geführt sind. Am anderen Ende des Airbagdeckels 31 (in der Fig. 3 das linke Ende) sind ebenfalls Lagerböcke 35 mit Bolzen 36 angebracht, die in Führungsschlitzen 37 geführt sind und an welchen Verbindungseinrichtungen 26 in Form von Zugdrähten 27 zum Öffnen des Airbagdeckels 31 und damit der Abdeckeinrichtungen 4 angebracht sind, wie in den bereits genannten älteren Anmeldungen beschrieben und dargestellt ist.

Die Folienschicht 12 und der Grundträger 13 der Abdeckeinrichtungen 4 sind im Bereich der Quer-Sollrißlinie 20 der Folienschicht 12 mit einem Gewebe 38, einer Folie o.ä. miteinander verbunden, wie es auch in den bereits genannten älteren Anmeldungen beschrieben und dargestellt ist. Dieses Gewebe 38 o.ä. nimmt "umstülpend" in der Technik eines Reißverschlusses die Folienschicht 12 und damit auch die Schaumstoffschicht 11, die zwischen der Folienschicht 12 und dem Grundträger 13 eingeschlossen ist, längs der Längs-Sollrißlinien 19 mit, wenn sich der Grundträger 13 der Abdeckeinrichtungen 4 bewegt, wenn an den Zugdrähten 27 gezogen wird (vergleiche Fig. 4 und 5). In Abhängigkeit von Form und Lage der Führungsschlitze 34 und 37 sowie des Grundträgers 13 wird aber vorher oder währenddessen, wie in den Fig. 4 und 5 zu sehen ist, auf Grund von Scherkräften (vergleiche auch Fig. 8) zunächst im Bereich der Lagerbökke 35 infolge des Ziehens an den Zugdrähten 27 der Grundträger 13 von den Lagerböcken 35 her zu den Lagerböcken 32 hin von der Folienschicht 12 getrennt, wobei z.B. die Schaumstoffschicht 11 reißt. Beim Bewegen des Grundträgers 13 längs der Führungsschlitze 34 und 37 wird nach oder während des Durchreissens der Schaumstoffschicht 11 bis zum Ende des Grundträgers 13, an dem die Lagerböcke 32 liegen, die Folienschicht 12 an der Quer-Sollrißlinie 20 durchgerissen und folgt dem sich weiterbewegenden Grundträger 13 infolge der Anbindung an diesen mittels des Gewebes 38, wie in der Fig. 5 zu sehen ist, wobei die Längs-Sollrißlinien 19 reissen.

Diese alternative Ausführungsform gemäß der vorliegenden Erfindung ergibt ein unproblematisches Öffnen der Abdeckeinrichtungen 4 und insbesondere der Folienschicht 12.

Die übrige Ausgestaltung sowie weitere Alternativen des zweiten Ausführungsbeispiels sind wie beim ersten Ausführungsbeispiel, das unter Bezugnahme auf die Fig. 1 und 2 beschrieben wurde, so dass zur Vermeidung von Wiederholungen hierauf nicht nochmals eingegangen, sondern zur analogen Heranziehung auf die entsprechenden Ausführungen weiter oben verwiesen wird.

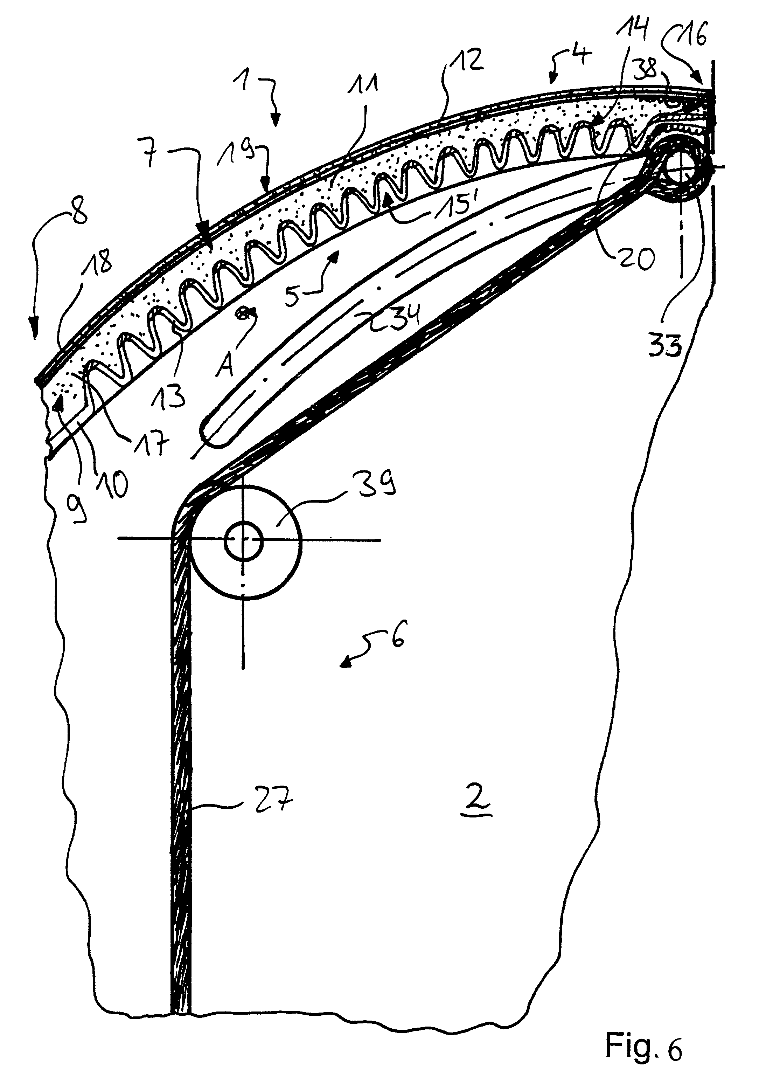

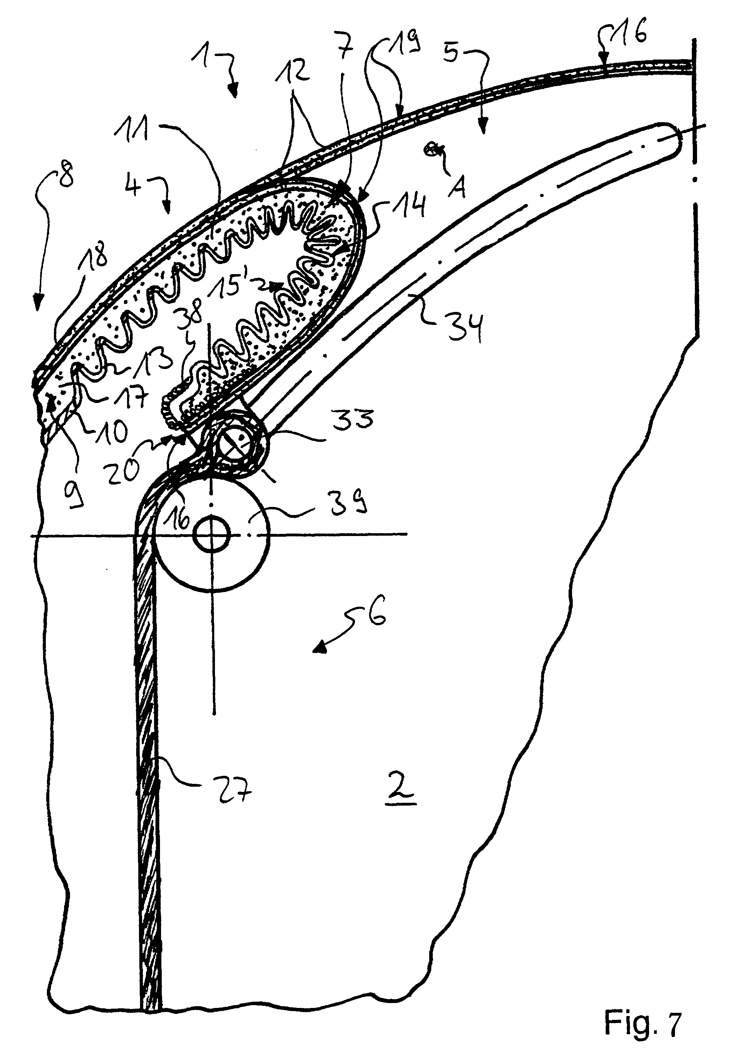

Unter Bezugnahme auf die Fig. 6 und 7 wird nachfolgend ein drittes Ausführungsbeispiel lediglich exemplarisch näher erläutert, woraus sich noch weitere Merkmale, Funktionen und Vorteile der vorliegenden Erfindung ergeben. Nachfolgend wird im wesentlichen nur noch auf Merkmale eingegangen, die noch nicht im Zusammenhang mit den vorerläuterten ersten und zweiten Ausführungsbeispielen behandelt wurden.

Die Fig. 6 und 7 zeigen eine weitere Alternative einer Airbagvorrichtung 1 mit einziehbaren Abdeckeinrichtungen 4 nach einer Art Umlenkprinzip, und zwar vor bzw. nach einer Auslösung der Airbagvorrichtung 1. Der Grundträger 13 der Abdecklage 7 ist derart gestaltet, daß er in einer Art "Faltungsstruktur" 15' (ähnlich der Wellenstruktur 15 beim ersten Ausführungsbeispiel) eines Blechs quer völlig steif und in Längsrichtung durch die Faltungsstruktur 15' derart beweglich ist, daß er z.B. um ca. 180 ° um eine Achse A parallel zu den Falten der Faltungsstruktur 15' umgelenkt oder umgebogen werden kann. Durch die "Faltungsstruktur" 15' ist der Grundträger 13 eine Versteifung 14. Der Grundträger 13 kann alternativ aus verformbarem Thermoplast, beispielsweise auch integral mit dem Armaturentafelträger gespritzt hergestellt, oder aus anderen Materialien, wie verformbarem Metall, bestehen. Der vorgefaltete Grundträger 13 wird mit dem Träger 10 der übrigen Armaturentafel 9 derart abgestimmt, indem er z.B. teilweise eingesägt, geeignet damit verbunden oder daran befestigt wird, dass er einerseits im Alltagsgebrauch stabil genug ist und andererseits bei einem Unfall aus dem Träger 10 der Armaturentafel 9 in den Unterbringungsraum 2 hinein herausgerissen werden kann. Die Fig. 6 und 7 zeigen eine im Halterandbereich 8 an der Halteseite 18 des Grundträgers 13 der Abdecklage 7 zur Bildung einer dauerhaften Fixierung 17 mit dem Träger 10 der Armaturentafel 9 einstückig oder integral ausgebildete Struktur, wobei der Grundträger 13 der Abdecklage 7 zur Biegsamkeit um nur eine Achse A entsprechend gefaltet und längs der Sollrißlinien 16 vorgeschädigt ist.

Im Bereich der Quer-Sollrißlinie 20 sind an der Abdecklage 7 die Verbindungseinrichtungen 26 angebracht, die wieder aus Zugdrähten oder -seilen 27 bestehen. Bei diesem dritten Ausführungsbeispiel können die Verbindungseinrichtungen 26, wie auch bei den anderen Ausführungsbeispielen, statt Zugdrähte oder -seile 27 auch andere z.B. starre Verbindungsstäbe o.ä. enthalten. Wesentlich ist nur, dass einerseits die Antriebsbewegung auf die Öffnungsmechanik 4 übertragen wird und andererseits vorgegebene Bewegungswege der Öffnungsmechanik 4 nicht behindert werden. Die Zugseile 27 sind an einem Lagerbock 32 angebracht und verlaufen im weiteren Verlauf um Rollen 39 umgelenkt. Bolzen 33 führen die ausgerissene Abdecklage 7 bei einer unfallbedingten Auslösung der Airbagvorrichtung 1 in Führungsschlitzen 34 zwangsweise zu einer ca. 180 ° Umlenkung in den Unterbringungsraum 2 hinein.

Beim vorliegenden dritten Ausführungsbeispiel sind die Zugseile 27, um Raum für den gefalteten Airbag (nicht gezeigt) zu schaffen, entsprechend z.B. mittels Rollen 39 umgelenkt. Damit die Folienschicht 12 und die Schaumstoffschicht 11 mit dem "gefalteten" Grundträger 13 dort, wo Zugkräfte angreifen, ausreichend stabil und zuverlässig verbunden bleiben, ist es von Vorteil, diese Teile beispielsweise mit Gewebe 38, Folie o.ä. durch Eingießen bzw. Ankleben zu verbinden. Entsprechend sind beim dritten Ausführungsbeispiel gemäß den Fig. 6 und 7 die Folienschicht 12 und der Grundträger 13 im Bereich der Quer-Sollrißlinie 20 allgemein mit Verbindungsmitteln, wie z.B. Gewebe 38, verbunden. Die Folienschicht 12 ist längs der Sollrißlinien 16 vorgeschädigt, wie beispielsweise in den Fig. 8 und 9 schematisch dargestellt ist.

Die Vorteile dieser Ausführung sind ein einfaches Einreißprinzip, eine einfache Führung und eine kurze Ziehlänge.

Die Fig. 8 zeigt schematisch Beanspruchungen an Rändern der Abdeckeinrichtungen entsprechend dem Verlauf der Sollrißlinien 16 beim zweiten Ausführungsbeispiel, und die Fig. 9 zeigt schematisch Beanspruchungen an Rändern der Abdeckeinrichtungen entsprechend dem Verlauf der Sollrißlinien 16 beim ersten bis dritten Ausführungsbeispiel.

Die Zugbeanspruchung gemäß dem Doppelpfeil C in den Fig. 8 und 9 am Stoß zweier Abdecklagen oder am Ende einer Abdecklage bei einer Ausführung mit nur einer Abdecklage, jeweils an der Quer-Sollrißlinie 20 führt problemlos zum Riß. An der einzuziehenden Kante beim zweiten Ausführungsbeispiel, d.h. an dem Ende im Bereich der Lagerböcke 35 (in der Fig. 3 das linke Ende) findet eine Scherbeanspruchung statt, wie durch die Pfeile D in der Fig. 8 symbolisiert ist. Dadurch kommt es zur Ablösung des Airbagdeckels 31 von der Folienschicht 12 (vergleiche Fig. 3 bis 5). Die Scherbelastungen bei den ersten bis dritten Ausführungsbeispielen an den Zugenden der Abdecklagen 7 sind durch die Pfeile E in der Fig. 9 angedeutet. Auf Grund der im Bereich der Quer-Sollrißlinie 20 auftretenden grossen Scherbelastungen ist hier jeweils eine besonders feste und sichere Verbindung des Grundträgers 13 mit der Folienschicht 12 beispielsweise mittels des erwähnten Gewebes 38 vorgesehen.

Die Vorschädigung der Folienschicht sind als Sollrißlinien 16 oder genauer Längs-Sollrißlinien 19 und Quer-Sollrißlinie 20 gezeigt, wobei das zur Quer-Sollrißlinie 20 entgegengesetzte Ende der Abdecklage 7 im Halterandbereich 8 durch die Halteseite 18 zur Bildung einer dauerhaften Fixierung 17 an z.B. einer Armaturentafel 9 gebildet ist. Diese Sollrißlinien 16 sind vorzugsweise für Insassen nicht sichtbar.

Verfahrensmäßig wird bei jeder Ausführungsform zunächst die Abdecklage 7 oder genauer deren Folienschicht 12 und evtl. je nach Bauart auch die Schaumstoffschicht 11 an der Quer-Sollrißlinie 20 aufgerissen. Danach reißt die Abdecklage 7 oder genauer deren Folienschicht 12 und evtl. je nach Bauart auch die Schaumstoffschicht 11 längs der Längs-Sollrißlinien 19 bis zur Halteseite 18, was bildlich mit dem Öffnen eines Reißverschlusses vergleichbar ist. Während dessen wird die Abdecklage 7 in den Unterbringungsraum 2 der Airbagvorrichtung 1 hineingezogen, wobei die Abdecklage 7 gekrümmt oder gebogen wird.

Die vorstehenden und in den Zeichnungen wiedergegebenen Merkmale und Merkmalskombinationen des Ausführungsbeispiels dienen lediglich der exemplarischen Verdeutlichung der Erfindung und nicht deren Beschränkung. Der Offenbarungsumfang der vorliegenden gesamten Unterlagen ist durch das bestimmt, was für den Fachmann ohne weiteres in den Ansprüchen, aber auch aus der Beschreibung, der Zeichnung und den vollständigen Inhalten der durch Bezugnahme aufgenommenen Voranmeldungen der vorliegenden Anmelderin entnehmbar ist. Insbesondere umfasst die Erfindung ferner alle Variationen, Modifikationen und Substitutionen, die der Fachmann dem gesamten Offenbarungsumfang der vorliegenden Unterlagen entnehmen kann. Insbesondere sind alle einzelnen Merkmale und Ausgestaltungsmöglichkeiten der Erfindung und ihrer Ausführungsbeispiele kombinierbar.

### Bezugszeichenliste

- 1: Airbagvorrichtung
- 2: Unterbringungsraum
- 3: Airbag
- 4: Abdeckeinrichtungen
- 5: Öffnungsbereich
- 6: Öffnungsmechanik
- 7: Abdecklage
- 8: Halterandbereich
- 9: Armaturentafel, Innenraumabdeckung
- 10: Träger
- 11: Schaumstoffschicht
- 12: Folienschicht
- 13: Grundträger
- 14: Versteifung
- 14': Versteifung
- 15: Wellenstruktur
- 15': Faltungsstruktur
- 16: Sollrißlinien
- 17: Fixierung
- 18: Halteseite
- 19: Längs-Sollrißlinien
- 20: Quer-Sollrißlinie
- 21: Druckplatte
- 22: Bolzen
- 23: Bolzen
- 24: Führungsschlitz
- 25: Führungsschlitz
- 26: Verbindungseinrichtungen
- 27: Zugdrähte oder -seile
- 28: Druckteil
- 29: Faltung
- 30: Zwischenwand
- 31: Airbagdeckel oder -klappe
- 32: Lagerböcke
- 33: Bolzen
- 34: Führungsschlitze
- 35: Lagerböcke
- 36: Bolzen
- 37: Führungsschlitze
- 38: Gewebe
- 39: Rollen
- A: Achse
- B: Pfeil Gasstrom
- C: Doppelpfeil Zugbeanspruchung
- D: Pfeile Scherbeanspruchung
- E: Pfeile Scherbeanspruchung

## Patentansprüche

1. Airbagvorrichtung mit einem Unterbringungsraum für einen Airbag, Abdeckeinrichtungen für einen Öffnungsbereich des Unterbringungsraums zum Austritt des Airbags nach einer Auslösung der Airbagvorrichtung, und einer Öffnungsmechanik zum Einziehen der Abdeckeinrichtungen aus dem Öffnungsbereich in den Unterbringungsraum, **dadurch gekennzeichnet, dass** die Abdeckeinrichtungen (4) wenigstens eine verformbare Abdecklage (7) enthalten, die an einem Halterandbereich (8) des Öffnungsbereiches (5) fixiert und im übrigen zum Freigeben des Öffnungsbereiches (5) von der Öffnungsmechanik (6) in den Unterbringungsraum (2) hinein verbiegbar ist.

2. Airbagvorrichtung nach Anspruch 1, **dadurch gekennzeichnet, dass** die wenigstens eine verformbare Abdecklage (7) Bestandteil einer Innenraumabdeckung eines Fahrzeuges ist und ausser im Halterandbereich (8) durch Sollrißlinien (16) gegenüber der übrigen Innenraumabdeckung des Fahrzeuges bestimmt ist.

3. Airbagvorrichtung nach Anspruch 1 oder 2, **dadurch gekennzeichnet, dass** die wenigstens eine verformbare Abdecklage (7) Versteifungen (14) enthält, die ein Verformen oder Verbiegen der Abdecklage (7) nur um eine Achse (A) begünstigen oder zulassen, oder mit Versteifungen (14') versehen ist, die vor einem Verformen oder Verbiegen der Abdecklage (7) von letzterer abgelöst werden.

4. Airbagvorrichtung nach einem der vorhergehenden Ansprüche, **dadurch gekennzeichnet, dass** die Öffnungsmechanik (6) nach einer Auslösung der Airbagvorrichtung (1) durch eine eigene Antriebsquelle, durch einen Gasgenerator der Airbagvorrichtung (1) oder durch den sich aufblasenden Airbag (3) betrieben wird.

5. Airbagvorrichtung nach einem der vorhergehenden Ansprüche, **dadurch gekennzeichnet, dass** die Öffnungsmechanik (6) eine solche Zwangsführung enthält, mittels der die wenigstens eine Abdecklage (7) sich verformend aus dem Öffnungsbereich (5) hin zu einem und/oder in einen Randbereich des Unterbringungsraums (2) ziehbar ist.

6. Auslöseverfahren für eine Airbagvorrichtung mit einem Unterbringungsraum für einen Airbag, wobei zum Austritt des Airbags nach einer Auslösung der Airbagvorrichtung Abdeckeinrichtungen für einen Öffnungsbereich des Unterbringungsraums mittels einer Öffnungsmechanik aus dem Öffnungsbereich in den Unterbringungsraum eingezogen werden, **dadurch gekennzeichnet, dass** wenigstens eine verformbare Abdecklage (7) der Abdeckeinrichtungen (4), die an einem Halterandbereich (8) des Öffnungsbereiches (5) fixiert ist, im übrigen zum Freigeben des Öffnungsbereiches (5) von der Öffnungsmechanik (6) in den Unterbringungsraum (2) hinein verbogen wird.

7. Auslöseverfahren für eine Airbagvorrichtung nach Anspruch 6, **dadurch gekennzeichnet, dass** die wenigstens eine verformbare Abdecklage (7) beim Einziehen in den Unterbringungsraum (2) längs Sollrißlinien (16) von einer die Abdekkeinrichtungen (4) umgebenden Innenraumabdeckung eines Fahrzeuges abgetrennt wird.

8. Auslöseverfahren für eine Airbagvorrichtung nach Anspruch 6 oder 7, **dadurch gekennzeichnet, dass** die wenigstens eine verformbare Abdecklage (7) beim Einziehen in den Unterbringungsraum (2) auf Grund von Versteifungen (14) zumindest im wesentlichen nur um eine Achse (A) verformt oder verbogen wird, oder dass Versteifungen (14') der wenigstens einen verformbaren Abdecklage (7) beim Einziehen in den Unterbringungsraum (2) vor einem Verformen oder Verbiegen der Abdecklage (7) von letzterer abgelöst werden.

9. Auslöseverfahren für eine Airbagvorrichtung nach einem der Ansprüche 6 bis 8, **dadurch gekennzeichnet, dass** die Öffnungsmechanik (6) nach einer Auslösung der Airbagvorrichtung (1) durch eine eigene Antriebsquelle, durch einen Gasgenerator der Airbagvorrichtung (1) oder durch den sich aufblasenden Airbag (3) betrieben wird.

10. Auslöseverfahren für eine Airbagvorrichtung nach einem der Ansprüche 6 bis 9, **dadurch gekennzeichnet, dass** die Öffnungsmechanik (6) mittels einer Zwangsführung die wenigstens eine Abdecklage (7) sich verformend aus dem Öffnungsbereich (5) hin zu einem und/oder in einen Randbereich des Unterbringungsraums (2) zieht.

## Claims

1. Airbag device having an accommodating space for an airbag, covering devices for an opening region of the accommodating space for the discharge of the airbag after the airbag device is triggered, and an opening mechanism for retracting the covering devices out of the opening region into the accommodating space, **characterized in that** the covering devices (4) contain at least one deformable covering layer (7) which is fixed on a retaining-edge region (8) of the opening region (5) and moreover can be bent into the accommodating space (2) by the opening mechanism (6) in order to release the opening region (5).

2. Airbag device according to Claim 1, **characterized in that** the at least one deformable covering layer (7) is part of an interior covering of a vehicle and, apart from in the retaining-edge region (8), is defined in relation to the remaining interior covering of the vehicle by predetermined tearing lines (16).

3. Airbag device according to Claim 1 or 2, **characterized in that** the at least one deformable covering layer (7) contains struts (14) which assist or permit a deformation or bending of the covering layer (7) only about an axis (A), or is provided with struts (14') which are detached from the covering layer (7) before the latter is deformed or bent.

4. Airbag device according to one of the preceding claims, **characterized in that** the opening mechanism (6) is operated, after the airbag device (1) is triggered, by a dedicated driving source, by a gas generator of the airbag device (1) or by the inflating airbag (3).

5. Airbag device according to one of the preceding claims, **characterized in that** the opening mechanism (6) contains a positive guide, by means of which the at least one covering layer (7) can be pulled in a deforming manner out of the opening region (5) up to and/or into an edge region of the accommodating space (2).

6. Triggering method for an airbag device having an accommodating space for an airbag, covering devices for an opening region of the accommodating space being retracted out of the opening region into the accommodating space by means of an opening mechanism in order for the airbag to be discharged after the airbag device is triggered, **characterized in that** at least one deformable covering layer (7) of the covering devices (4), which layer is fixed on the retaining-edge region (8) of the opening region (5), is moreover bent into the accommodating space (2) by the opening mechanism (6) in order to release the opening region (5).

7. Triggering method for an airbag device according to Claim 6, **characterized in that** the at least one deformable covering layer (7), when it is being retracted into the accommodating space (2), is severed along predetermined lines (16) from an interior covering of a vehicle, which covering surrounds the covering devices (4).

8. Triggering method for an airbag device according to Claim 6 or 7, **characterized in that** the at least one deformable covering layer (7), when it is being retracted into the accommodating space (2), is deformed or bent at least essentially only about an axis (A) because of struts (14), or **in that** struts (14') of the at least one deformable layer (7), when it is being retracted into the accommodating space (2), are detached from the covering layer (7) before the latter is deformed or bent.

9. Triggering method for an airbag device according to one of Claims 6 to 8, **characterized in that**,: after the airbag device (1) is triggered, the opening mechanism (6) is operated by a dedicated driving source, by a gas generator of the airbag device (1) or by the inflating airbag (3).

10. Triggering method for an airbag device according to one of Claims 6 to 9, **characterized in that** the opening mechanism (6) pulls the at least one covering layer (7) in a deforming manner out of the opening region (5) up to and/or into an edge region of the accommodating space (2) by means of a positive guide.

## Revendications

1. Dispositif à coussin de sécurité gonflable comportant un espace d'établissement pour un coussin de sécurité gonflable, des dispositifs d'obturation d'une zone d'ouverture de l'espace d'établissement pour sortir le coussin de sécurité gonflable après le déclenchement du dispositif à coussin de sécurité gonflable et un mécanisme d'ouverture pour rentrer le dispositif d'obturation de la zone d'ouverture à l'intérieur de l'espace d'établissement, **caractérisé en ce que** les dispositifs d'obturation (4) contiennent au moins un opercule (7) déformable, lequel est fixé sur une zone de bord de support (8) de la zone d'ouverture (5) et peut du reste se déformer à l'intérieur de l'espace d'établissement (2) en vue de la libération de la zone d'ouverture (5) par le mécanisme d'ouverture (6).

2. Dispositif à coussin de sécurité gonflable selon la revendication 1, **caractérisé en ce que** l'au moins un opercule (7) déformable est intégré aux panneaux de garniture intérieure d'un véhicule et est défini à l'extérieur dans la zone de bord de support (8) par des lignes en creux de consigne (16) par rapport au reste des panneaux de garniture intérieure du véhicule.

3. Dispositif à coussin de sécurité gonflable selon la revendication 1 ou 2, **caractérisé en ce que** l'au moins un opercule (7) déformable contient des pièces de renforcement (14), lesquelles favorisent ou permettent une déformation ou une incurvation de l'opercule (7) uniquement autour d'un axe (A), ou est pourvu de pièces de renforcement (14'), lesquelles sont détachées de l'opercule (7) préalablement à une déformation ou une incurvation de ce dernier.

4. Dispositif à coussin de sécurité gonflable selon l'une quelconque des revendications précédentes, **caractérisé en ce que** le mécanisme d'ouverture (6) est actionné après un déclenchement du dispositif à coussin de sécurité gonflable (1) par un propre mécanisme d'actionnement, par un générateur de gaz du dispositif à coussin de sécurité gonflable (1) ou par le gonflement du coussin de sécurité gonflable (3).

5. Dispositif à coussin de sécurité gonflable selon l'une quelconque des revendications précédentes, **caractérisé en ce que** le mécanisme d'ouverture (6) met en oeuvre une telle technique de guidage contraint, au moyen de laquelle l'au moins un opercule (7) peut être ramené en se déformant vers l'extérieur de la zone d'ouverture (5) vers et/ou dans une zone de bord de l'espace d'établissement (2).

6. Procédé de déclenchement d'un dispositif à coussin de sécurité gonflable comportant un espace d'établissement pour un coussin de sécurité gonflable, dans lequel, pour sortir le coussin de sécurité gonflable après le déclenchement du dispositif à coussin de sécurité gonflable, des dispositifs d'obturation d'une zone d'ouverture de l'espace d'établissement sont rentrés au moyen d'un mécanisme d'ouverture de la zone d'ouverture à l'intérieur de l'espace d'établissement, **caractérisé en ce qu'**au moins un opercule (7) déformable des dispositifs d'obturation (4), lequel est fixé à une zone de bord de support (8) de la zone d'ouverture (5), est du reste déformé à l'intérieur de l'espace d'établissement (2) en vue de la libération de la zone d'ouverture (5) par le mécanisme d'ouverture (6).

7. Procédé de déclenchement d'un dispositif à coussin de sécurité gonflable selon la revendication 6, **caractérisé en ce que** l'au moins un opercule (7) déformable est séparé des panneaux de garniture intérieure du véhicule entourant les dispositifs d'obturation (4) le long des lignes en creux de consigne (16), lorsque ledit opercule est rentré à l'intérieur de l'espace d'établissement (2).

8. Procédé de déclenchement d'un dispositif à coussin de sécurité gonflable selon la revendication 6 ou 7, **caractérisé en ce que** l'au moins un opercule (7) déformable lorsqu'il est rentré à l'intérieur de l'espace d'établissement (2) n'est déformé ou incurvé qu'au moins essentiellement autour d'un axe (A) en raison des pièces de renforcement (14) ou que les pièces de renforcement (14') de l'au moins un opercule (7) déformable sont détachées de ce dernier lorsqu'il est rentré à l'intérieur de l'espace d'établissement (2) préalablement à une déformation ou une incurvation de l'opercule (7).

9. Procédé de déclenchement d'un dispositif à coussin de sécurité gonflable selon une des revendications 6 à 8, **caractérisé en ce que** le mécanisme d'ouverture (6) est actionné après un déclenchement du dispositif à coussin de sécurité gonflable (1) par un propre mécanisme d'actionnement, par un générateur de gaz du dispositif à coussin de sécurité gonflable (1) ou par le gonflement du coussin de sécurité gonflable (3).

10. Procédé de déclenchement d'un dispositif à coussin de sécurité gonflable selon une des revendications 6 à 9, **caractérisé en ce que** le mécanisme d'ouverture (6) ramène au moyen d'une technique de guidage contraint l'au moins un opercule (7) en se déformant vers l'extérieur de la zone d'ouverture (5) vers et/ou dans une zone de bord de l'espace d'établissement (2).
